# EUROPÄISCHE PATENTSCHRIFT

(11) **EP 2 411 454 B1**
(45) Veröffentlichungstag und Bekanntmachung des Hinweises auf die Patenterteilung: **01.05.2013**
(21) Anmeldenummer: 10701644.6
(22) Anmeldetag: 13.01.2010
(51) Int. Cl.: C08J 5/00

(54) **PREPREGS UND DARAUS HERGESTELLTE FORMKÖRPER**
PREPREGS AND MOLDED BODIES PRODUCED FROM SAME
PRÉIMPRÉGNÉS ET CORPS MOULÉS RÉALISÉS À PARTIR DESDITS PRÉIMPRÉGNÉS

(30) Priorität: 24.03.2009 DE 102009001793
(43) Veröffentlichungstag der Anmeldung: 01.02.2012
(73) Patentinhaber: Evonik Degussa GmbH, 45128 Essen (DE)
(72) Erfinder: SCHMIDT, Friedrich Georg, 45721 Haltern am See (DE); SPYROU, Emmanouil, 46514 Schermbeck (DE); GRENDA, Werner, 44627 Herne (DE); DE NARDO, Sebastian, 45899 Gelsenkirchen (DE); PLANITZ-PENNO, Sibylle, 58239 Schwerte (DE)
(86) Internationale Anmeldenummer: PCT/EP2010/050319
(87) Internationale Veröffentlichungsnummer: WO 2010/108701

(56) Entgegenhaltungen:
- WO-A-91/15538
- WO-A-2006/084523
- WO-A-2007/010573
- WO-A-2007/110617
- WO-A-2008/127556
- WO-A-2008/130484
- WO-A-2008/138855
- WO-A-2009/156282
- WO-A-2010/007292
- DE-A1- 19 810 312
- US-A- 6 077 901

## Beschreibung

Die Erfindung betrifft Prepregs und daraus hergestellte Composite-Bauteile (Formkörper), erhältlich durch die Verwendung pulverförmiger reaktiver Polyurethanzusammensetzungen.

Verschiedene Formgebungsprozesse, wie z. B. das Reaction-Transfer-Moulding-(RTM)-Verfahren beinhalten die Einbringung der Verstärkungsfasern in eine Form, das Schließen der Form, das Einbringen der vernetzbaren Harzformulierung in die Form und die anschließende Vernetzung des Harzes, typischerweise durch Wärmezufuhr.

Eine der Beschränkungen eines solchen Prozesses ist das relativ schwierige Einlegen der Verstärkungsfasern in die Form. Die einzelnen Lagen des Gewebes oder Geleges müssen zugeschnitten und den unterschiedlichen Formgeometrien angepasst werden. Das kann sowohl zeitintensiv wie auch kompliziert sein, insbesondere wenn die Formkörper auch Schaum- oder andere Kerne enthalten sollen. Vorformbare Faserverstärkungen mit einfachem Handling und bestehenden Umformmöglichkeiten wären hier wünschenswert.

Faserverstärkte Materialien in Form von Prepregs werden bereits in vielen industriellen Anwendungen wegen ihrer bequemen Handhabung und der erhöhten Effizienz bei der Verarbeitung im Vergleich zu der alternativen wet-lay-up Technologie eingesetzt.

Industrielle Anwender solcher Systeme verlangen neben schnelleren Zykluszeiten und höheren Lagerstabilitäten auch bei Raumtemperatur auch eine Möglichkeit die Prepregs zuzuschneiden, ohne dass bei automatisiertem Zuschnitt und Lay-up der einzelnen Prepreg-Lagen die Schneidwerkzeuge mit der häufig klebrigen Matrixmaterial verunreinigt werden.

Neben Polyestern, Vinylestern und Epoxy-Systemen gibt es eine Reihe spezialisierter Harze im Bereich der vernetzenden Matrix-Systeme. Dazu zählen auch Polyurethan-Harze, die wegen ihrer Zähigkeit, Schadenstoleranz und die Festigkeit insbesondere zur Herstellung von Composite-Profilen über Pultrusionsverfahren eingesetzt werden. Als Nachteil wird häufig die Toxizität der verwendeten Isocyanate genannt.

Polyurethan-Composites weisen auch gegenüber Vinylestern, ungesättigten Polyesterharzen (UPE) oder UPE-Urethan-Hybrid-Harzen eine überlegene Zähigkeit auf.

Prepregs und daraus hergestellte Composites auf der Basis von Epoxy-Systemen werden zum Beispiel beschrieben in WO 98/50211, US 4,992,228, US 5,080,857, US 5,427,725, GB 2007676, GB 2182074, EP 309 221, EP 297 674, WO 89/04335, US 5,532,296 und US 4,377,657, US 4,757,120.

In der WO 2006/043019 wird ein Verfahren zur Herstellung von Prepregs auf der Basis von Epoxidharz-Polyurethanpulvern beschrieben.

Des Weiteren sind Prepregs auf der Basis von pulverförmigen Thermoplasten als Matrix bekannt.

In der US 2004/0231598 wird eine Methode beschrieben, bei der die Partikel über eine spezielle Beschleunigungskammer mit elektrostatischer Aufladung geführt werden. Diese Apparatur dient zur Beschichtung von Glas-, Aramid- oder Kohlefaser-Substraten für die Herstellung von Prepregs aus thermoplastischen Harzen. Als Harze werden Polyethylen (PE), Polypropylen (PP), Polyetheretherketon (PEEK), Polyethersulfon (PES), Polyphenylsulfon (PPS), Polyimid (PI), Polyamid (PA), Polycarbonat (PC), Polyethylenterephthalat (PET), Polyurethan (PU), Polyester und Fluorpolymere genannt. Die daraus hergestellten thermoplastischen Prepreg-Textilien zeigen inherente Zähigkeit, ein gutes viscoelastische Dämpfungsverhalten, eine unbegrenzte Lagerfähigkeit, gute Chemikalienbeständigkeit und Recyclierbarkeit.

In der WO 98/31535 wird eine Methode zur Pulverimprägnierung beschrieben, bei der die zu imprägnierenden Glas- oder Kohlefaserstränge mit einer Partikel/Flüssigkeits- bzw. Partikel/Gas-Mischung in einem definierten Geschwindigkeitsprofil beaufschlagt werden. Dabei bestehen die Pulver aus keramischen bzw. thermoplastischen Materialien, unter anderem thermoplastisches Polyurethan.

In der WO 99/64216 werden Prepregs und Composite und eine Methode zu deren Herstellung beschrieben, bei der Emulsionen mit so kleinen Polymerpartikeln verwendet werden, dass eine Einzelfaserumhüllung ermöglicht wird. Die Polymere der Partikel haben eine Viskosität von mindestens 5000 centipoise und sind entweder Thermoplaste oder vernetzende Polyurethan-Polymere.

In der EP 0590702 werden Pulverimprägnierungen zur Herstellung von Prepregs beschrieben, bei denen das Pulver aus einem Gemisch aus einem Themoplasten und einem reaktiven Monomer bzw. Prepolymeren besteht.

Die WO 2005/091715 beschreibt ebenfalls die Verwendung von Thermoplasten zur Herstellung von Prepregs.

Michaeli et al. beschreibt die Entwicklung einer Pulvertechnologie für einen Pultrusionsprozess mit Thermoplastischen Polyurethanen, TPU genannt, in Coatings & Composite Materials , Nr.19 , p37 - 39, 1997.

Weiterhin werden in dem Artikel Processing and properties of thermoplastic polyurethane prepreg. (Ma, C. C. M.; Chiang, C. L. Annual Technical Conference - Society of Plastics Engineers (1991), 49th 2065-9.) Thermoplastische Polyurethan (TPU) Prepregs auf Basis von Lösemitteln und Wasser enthaltenden TPU-Systemen offenbart.

Prepregs mit einer Matrix auf der Basis von 2-Komponenten-Polyurethanen (2-K-PUR) sind bekannt.

Die Kategorie der 2-K-PUR umfasst im Wesentlichen die klassischen reaktiven Polyurethan-Harz-Systeme. Prinzipiell handelt es sich um ein System aus zwei getrennten Komponenten. Während der maßgebende Bestandteil der einen Komponente immer ein Polyisocyanat ist, sind dies bei der zweiten Polyole bzw. bei neueren Entwicklungen auch Amino- oder Amin-Polyol-Gemische. Beide Teile werden erst kurz vor der Verarbeitung miteinander vermischt. Danach erfolgt die chemische Aushärtung durch Polyadition unter Bildung eines Netzwerkes aus Polyurethan bzw. Polyharnstoff.

2-Komponenten-Systeme haben nach dem Vermischen beider Bestandteile eine begrenzte Verarbeitungszeit (Standzeit, Potlife), da die einsetzende Reaktion zur allmählichen Viskositätserhöhung und schließlich zur Gelierung des Systems führt. Zahlreiche Einflussgrößen bestimmen dabei die effektive Zeit seiner Verarbeitbarkeit: Reaktivität der Reaktionspartner, Katalysierung, Konzentration, Löslichkeit, Feuchtegehalt, NCO/OH-Verhältnis und Umgebungstemperatur sind die wichtigsten [Lackharze, Stoye/Freitag, Hauser-Verlag 1996, Seiten 210/212].

Der Nachteil der Prepregs auf der Basis derartiger 2-K-PUR-Systeme ist, dass nur eine kurze Zeit zur Verarbeitung des Prepreg zu einem Composite zur Verfügung steht. Deshalb sind derartige Prepregs nicht über mehrere Stunden geschweige denn Tage lagerstabil.

Im Folgenden folgt eine Beschreibung der Polyurethan-Prepregs bzw. -Composite auf der Basis von 2-K-PUR-Systemen.

In dem Artikel von K.Recker wird über die Entwicklung eines 2-K-Polyurethansystems für das Harzmattenverfahren unter besonderer Berücksichtigung der Verarbeitungseigenschaften für SMC-Bauteile berichtet. (Baypreg - ein neuer POLYURETHAN-Werkstoff für das Harzmattenverfahren , Recker, Klaus, Kunststoffe-Plastics 8,1981).

Die WO 2005/049301 offenbart ein katalytisch aktiviertes 2-K-PUR-System, wobei die Polyisocyanat-Komponente und das Polyol gemischt werden und mittels Pultrusion zu einem Composite verarbeitet werden.

In der WO 2005/106155 werden faserverstärkte Composites für die Bau-Industrie offenbart, die mittels der Long-Fiber-Injection (LFI) Technologie mit 2-K-Polyurethan-Systemen hergestellt werden.

In der JP 2004196851 werden Composites beschrieben, die aus Carbonfasem und organischen Fasern, wie z. B. Hanf, unter Verwendung einer Matrix aus 2-K-PUR auf der Basis von polymeren Methylendiphenyldüsocyanat (MDI) und speziellen OH-Gruppen haltigen Verbindungen hergestellt werden.

Die EP 1 319 503 beschreibt Polyurethan-Composites, wobei spezielle Polyurethan-Deckschichten für ein mit einem 2K-PUR-Harz getränktes Faser-Laminat, das eine Kernschicht (z. B. eine Papierwabe) umhüllt, verwendet werden. Das 2K-PUR-Harz besteht z.B. aus MDI und einer Mischung aus Polypropylentriolen und Diolen von Ethylenoxid-Propylenoxid-Copolymeren.

In der WO 2003/101719 werden Polyurethanbasierte Composites und die Methoden zur Herstellung beschrieben. Es handelt sich um 2-K-Polyurethanharze mit definierten Viskositäten und bestimmten Gelzeiten.

2-K-PUR-Systeme werden ebenfalls abgehandelt in: "Fiber reinforced polyurethane composites: shock tolerant components with particular emphasis on armor plating" (Ratcliffe, Colin P.; Crane, Roger M.; Santiago, Armando L., AMD (1995), 211 (Innovative Processing and Characterization of Composite Materials), 29-37.) und in Fiber-reinforced polyurethane composites. I. Process feasibility and morphology. (Ma, Chen Chi M.; Chen, Chin Hsing. International SAMPE Symposium and Exhibition (1992), 37 (Mater. Work. You 21 st Century), 1062-74.)

Von der unterschiedlichen Bindemittelbasis abgesehen entsprechen feuchtigkeitshärtende Lacke sowohl in ihrer Zusammensetzung als auch in ihren Eigenschaften weitgehend analogen 2K-Systemen. Es werden im Prinzip die gleichen Lösemittel, Pigmente, Füllstoffe und Hilfsmittel verwendet. Anders als 2K-Lacke tolerieren diese Systeme vor ihrer Applikation aus Stabilitätsgründen keinerlei Feuchtigkeit.

Bekannt sind auch physikalisch trocknende Systeme auf der Basis von nichtreaktiven PUR-Elastomeren. Es handelt sich hierbei um höhermolekulare, lineare, thermoplastische Urethane aus Diolen und Diisocyanaten, vorzugsweise MDI, TDI, HDI und IPDI. Solche thermoplastischen Systeme weisen in der Regel sehr hohe Viskositäten und damit auch sehr hohe Verarbeitungstemperaturen auf. Dies erschwert den Einsatz für Prepregs maßgeblich.

Bei der Herstellung von Prepregs mit Faserverbunden ist der Einsatz von Pulvern bei reaktiven Systemen eher unüblich und beschränkt sich bislang auf wenige Einsatzgebiete. Das wohl gängigste Verfahren, um ein Pulver auf eine Faseroberfläche zu bringen, ist das Wirbelbettverfahren (fluidized bed impregnation). Durch eine aufwärts gerichtete Strömung werden Pulverpartikel in einen Zustand versetzt, in dem sie fluid-ähnliche Eigenschaften aufweisen.

Dieses Verfahren wird in der EP 590 702 angewandt. Dabei werden die Stränge einzelner Faserbündel auseinander geflochten und im Wirbelbett mit dem Pulver beschichtet. Das Pulver besteht dabei aus einer Mischung aus reaktivem und thermoplastischem Pulver, um so die Eigenschaften der Matrix zu optimieren. Einzelne Rovings (Faserbündel) werden schließlich zusammengelegt und mehrere Lagen bei einem Druck von 16 bar für etwa 20 Minuten verpresst. Die Temperaturen variieren zwischen 250 und 350 °C. Häufig kommt es allerdings beim Wirbelbettverfahren zu unregelmäßiger Beschichtung, insbesondere wenn die Stränge nicht auseinander gezogen werden.

Diesbezüglich wird in der US 20040231598 eine Methode vorgestellt, die ähnlich dem Wirbelbettverfahren funktioniert. Dabei transportiert ein Luftstrom die Partikel zum Substrat und es erfolgt durch einen speziellen Aufbau eine gleichmäßige Abscheidung des Pulvers.

Ein weiteres Verfahren beschreibt die, US 20050215148. Dort werden mit der eben erwähnten Vorrichtung gleichmäßige Verteilungen des Pulvers auf der Faser erreicht. Die Partikelgröße reicht dabei von 1 bis 2000 µm. Beschichtet wird bei mehreren Versuchen von einer oder von zwei Seiten. Durch die gleichmäßige Aufbringung des Pulvers werden nach einem anschließenden Verpressen der Prepregs Laminate ohne Lufteinschlüsse erzeugt.

Eine weitere Anmeldung, WO 2006/043019 beschreibt die Anwendung von epoxy- und amino-terminierten Harzen in Pulverform. Dabei werden die Pulver vermischt und auf die Fasern gegeben. Anschließend werden die Partikel angesintert. Die Partikelgröße liegt zwischen 1 und 3000 µm, vorzugsweise aber zwischen 1 und 150 µm.

Diese Einschränkung der Partikelgröße auf eher kleine Durchmesser wird auch in einer Studie der Michigan State University empfohlen. Dabei ist die Theorie, dass Partikel mit kleinen Durchmessern eher in Hohlräume zwischen einzelnen Filamenten eindringen können als Partikel mit großen Durchmessern (S. Padaki, L.T. Drzal: a simulation study on the effects of particle size on the consolidation of polymer powder impregnated tapes, Department of Chemical Engineering, Michigan State University, Composites: Part A (1999), pp. 325-337).

Neben der Prepregtechnik werden auch in anderen klassischen Verfahren reaktive Pulver-Systeme eingesetzt, so beispielsweise in der Wickeltechnik [M.N. Ghasemi Nejhad, K.M. Ikeda: Design, manufacture and characterization of composites using on-line recycled thermoplastic powder impregnation of fibres and in-situ filament winding, Department of Mechanical Engineering, University of Hawaii at Manoa, Journal of Thermoplastic Composite Materials, Vol 11, pp. 533-572, November 1998] oder beim Pultrusionsverfahren. Für das Pultrusionsverfahren werden beispielsweise Faserseile (Towpregs) mit dem Pulver beschichtet und zunächst als sogenannte Towpregs aufgewickelt und gelagert. Eine Möglichkeit zur Herstellung ist in einem Artikel des SAMPE Journal's beschrieben [R.E. Allred, S. P. Wesson, D. A. Babow: powder impregnation studies for high temperature towpregs, Adherent Technologies, SAMPE Journal, Vol. 40, No. 6, pp. 40-48, November/ December 2004]. In einer weiteren Untersuchung wurden solche Towpregs durch das Pultrusionsverfahren zusammen gepresst und ausgehärtet zu Werkstoffbauteilen [N.C. Parasnis, K. Ramani, H.M. Borgaonkar : Ribbonizing of electrostatic powder spray impregnated thermoplastic tows by pultrusion, School of Mechanical Engineering, Purdue University, composites, Part A, Applied science and manufacturing, Vol. 27, pp. 567-574, 1996]. Obwohl die Herstellung von Towpregs und anschließende Verpressung im Pultrusionsverfahren bereits mit duroplastischen Systemen durchgeführt wurde, werden bei diesem Verfahren bislang größtenteils nur thermoplastische Systeme eingesetzt.

WO 2010/007292 betrifft die Verwendung eines verkapselten Adhäsionspromotors.

WO 2009/156282 betrifft hochreaktive, Uretdiongruppen haltige Polyurethanzusammensetzungen, die bei niedrigen Temperaturen aushärten.

WO 2008/130484 beschreibt prä-imprägnierte Compositmaterialien (prepregs), die zur Herstellung von Compositteilen eingesetzt werden.

WO 2008/138855 beschreibt eine polyurethanhaltige Zusammensetzung.

WO 2007/110617 offenbart eine nichtfaserige Membran mit verstärkendem Partikelmaterial, bei dem es sich um Polyurethan handelt.

WO 2008/127556 beschreibt prä-imprägnierte Compositmaterialien (prepregs), die zur Herstellung von High-Performance Compositteilen eingesetzt werden.

WO 2007/010573 offenbart polyurethanhaltige Composite-Materialien umfassend Prepregs.

WO 2006/084523 offenbart Dispersionen, die polyurethanhaltig sein können, sowie Materialien, u. a. Fasern, die mit derartigen Dispersionen behandelt werden können.

US 6,077,901 beschreibt eine polyurethanhaltige Dispersion und deren Verwendung zur Behandlung von Stahlplatten

DE 19810312 beschreibt einen Zweikomponenten-Spritzgießverfahren mit glasfaserverstärktem Polyamid 6 und modifiziertem thermoplastischem Polyurethan.

WO 91/15538 offenbart die Behandlung von Prepreg-Materialien umfassend Fasern mit einer Polymerbeschichtung in Form einer Paste oder eines Films, die Polyurethan umfassen kann

Die Aufgabe war es, ein problemlos zu handhabendes, das heißt nicht toxisches, polyurethanbasierendes Prepreg-System zu finden, das weder die hohen Viskositäten der thermoplastische Polyurethan-Systeme und damit die schwierige Faser- bzw. Gewebe-Durchtränkung noch die kurzen Verarbeitungszeiten von 2-K-Polyurethan-Systemen aufweist. Weitere Aufgabe dieser Erfindung war es daher, Prepregs mit Polyurethan-Matrixmaterial zu finden, welche mit einem einfachen Verfahren hergestellt werden können, wobei das Hauptaugenmerk auf das Handling und die Lagerungsfähigkeit der Prepregs gelegt werden sollte.

Für die erfindungsgemäßen Prepregs ist es vorteilhaft, wenn die Viskosität der unvernetzten Matrixmaterialien gering genug ist, um bei der Herstellung des Composite-Bauteils eine Benetzung des Faser förmigen Trägers zu gewährleisten, wobei auch eine Thixotropie vorteilhaft sein kann, damit ein Abfließen des Harzes in senkrechten Bauteilsegmenten verhindert werden kann.

Durch die Wahl geeigneter Ausgangsstoffe zu Herstellung der Matrixmaterialien kann eine genügend lange Verarbeitungszeit (abhängig von der jeweiligen Anwendung bei der Herstellung der Composite) zwischen dem Aufschmelzen der nicht ausreagierten Matrixmaterial und der Vollendung der Reaktion gewährleistet werden.

Überraschend wurde nun gefunden, dass sich mit reaktiven pulverförmigen Polyurethanzusammensetzungen lagerstabile, aber noch reaktive und somit bei der Composite-Bauteil-Herstellung vernetzbare Polyurethan basierende Prepregs herstellen lassen, die für die Herstellung leistungsfähiger Composite für verschiedenste Anwendungen im Bereich der Bau-, der Automobil-, der Luft- und Raumfahrt-Industrie, der Energietechnik (Windkraftanlagen) und im Boots- und Schiffbau eingesetzt werden können. Die erfindungsgemäß enthaltenen reaktiven pulverförmigen Polyurethanzusammensetzungen sind umweltfreundlich, kostengünstig, weisen gute mechanische Eigenschaften auf, lassen sich einfach verarbeiten und zeichnen sich nach Härtung durch eine gute Wetterbeständigkeit wie durch ein ausgewogenes Verhältnis zwischen Härte und Flexibilität aus.

Gegenstand der Erfindung sind Prepregs gemäß Anspruch 1.

Die erfindungsgemäßen Prepregs weisen eine sehr hohe Lagerstabilität bei Raumtemperatur auf, sobald das Matrixmaterial einen Tg von mindestens 40 °C aufweist. Diese beträgt je nach enthaltener reaktiver pulverförmiger Polyurethanzusammensetzung mindestens einige Tage bei Raumtemperatur, aber in der Regel sind die Prepregs mehrere Wochen bei 40 °C und darunter lagerstabil.

Die Prepregs sind nach dem Applizieren und Fixieren, bevorzugt durch thermische Behandlung, bevorzugt durch Ansintern der reaktiven pulverförmigen Polyurethanzusammensetzung ohne jedoch zu vernetzen, nicht klebrig und daher sehr gut zu handhaben und weiter zu verarbeiten. Die erfindungsgemäß eingesetzten reaktiven pulverförmigen Polyurethanzusammensetzungen weisen demnach eine sehr gute Haftung und Verteilung auf dem Faser förmigen Träger auf.

Während der Weiterverarbeitung der Prepregs zu Composites (Verbundwerkstoffen) z. B. durch Verpressen bei erhöhten Temperaturen, erfolgt eine sehr gute Imprägnierung des Faser förmigen Trägers, dadurch bedingt, dass die dabei flüssig niedrig viskosen reaktiven Polyurethanzusammensetzungen vor der Vernetzungsreaktion die Faser des Trägers sehr gut benetzen, bevor durch die Vernetzungsreaktion der reaktiven Polyurethanzusammensetzung bei erhöhten Temperaturen eine Vergelung eintritt beziehungsweise die komplette Polyurethanmatrix durchhärtet.

Je nach Zusammensetzung der verwendeten reaktiven pulverförmigen Polyurethanzusammensetzung und gegebenenfalls zugesetzten Katalysatoren können sowohl die Geschwindigkeit der Vernetzungsreaktion bei der Herstellung der Composite-Bauteile als auch die Eigenschaften der Matrix in weiten Bereichen variiert werden.

Als Matrixmaterial wird im Rahmen der Erfindung die zur Herstellung der Prepregs eingesetzte reaktive pulverförmige Polyurethanzusammensetzung definiert und bei der Beschreibung der Prepregs die auf der Faser fixierte beziehungsweise haftende, noch reaktive Polyurethanzusammensetzung. Die Matrix ist definiert als die im Composite vernetzten Matrixmaterialien aus den reaktiven pulverförmigen Polyurethanzusammensetzungen.

### Träger

Der Faser förmige Träger in der vorliegenden Erfindung besteht aus Faser förmigem Material (auch häufig Verstärkungsfasern genannt). Im Allgemeinen ist jegliches Material, aus dem die Fasern bestehen, geeignet, bevorzugt wird jedoch Faser förmiges Material aus Glas, Kohlenstoff, Kunststoffen, wie z. B. Polyamid (Aramid) oder Polyester, Naturfasern oder mineralischen Fasermaterialien wie Basaltfasern oder keramische Fasern (Oxidische Fasern auf Basis von Aluminiumoxiden und/oder Siliciumoxiden) verwendet. Auch Mischungen von Fasertypen, wie z. B. Gewebe-Kombinationen aus Aramid- und Glasfasern, oder Kohlenstoff- und Glasfasern, können verwendet werden. Ebenso sind Hybrid-Composite-Bauteile mit Prepregs aus unterschiedlichen Faser förmigen Trägern herstellbar.

Glasfasern sind hauptsächlich wegen ihres relativ geringen Preises die am häufigsten verwendeten Fasertypen. Prinzipiell sind hier alle Arten von glasbasierenden Verstärkungsfasern geeignet (E-Glas-, S-Glas-, R-Glas-, M-Glas-, C-Glas-, ECR-Glas-, D-Glas-, AR-Glas-, oder Hohlglasfasern).

Kohlenstofffasern kommen im Allgemeinen in Hochleistungsverbundverstoffen zum Einsatz, wo auch die im Verhältnis zur Glasfaser niedrigere Dichte bei gleichzeitig hoher Festigkeit ein wichtiger Faktor ist. Kohlenstofffasern (auch Carbonfasern) sind industriell hergestellte Fasern aus kohlenstoffhaltigen Ausgangsmaterialien, die durch Pyrolyse in graphitartig angeordneten Kohlenstoff umgewandelt werden.

Man unterscheidet isotrope und anisotrope Typen: isotrope Fasern besitzen nur geringe Festigkeiten und geringere technische Bedeutung, anisotrope Fasern zeigen hohe Festigkeiten und Steifigkeiten bei gleichzeitig geringer Bruchdehnung.

Als Naturfasern werden hier alle Textilfasern und Faserwerkstoffe bezeichnet, die aus pflanzlichem und tierischem Material gewonnen werden (z. B. Holz-, Zellulose-, Baumwoll-, Hanf-, Jute-, Leinen-, Sisal-, Bambusfasern).

Aramid-Fasern weisen, ähnlich wie auch Kohlenstofffasern, einen negativen Wärmeausdehnungskoeffizienten auf, werden also bei Erwärmung kürzer. Ihre spezifische Festigkeit und ihr Elastizitätsmodul ist deutlich niedriger als jene von Kohlenstofffasern. In Verbindung mit dem positiven Ausdehnungskoeffizienten des Matrixharzes lassen sich hoch maßhaltige Bauteile fertigen. Gegenüber Kohlenstofffaser verstärkten Kunststoffen ist die Druckfestigkeit von Aramidfaser-Verbundwerkstoffen deutlich geringer. Bekannte Markennamen für Aramidfasern sind Nomex^{®}und Kevlar^{®} von DuPont, oder Teijinconex^{®}, Twaron^{®} und Technora^{®} von Teijin. Besonders geeignet und bevorzugt sind Träger aus Glasfasern, Kohlenstofffasern, Aramidfasern oder keramische Fasern.

Bei dem Faser förmigen Material handelt es sich um ein textiles Flächengebilde. Geeignet sind textile Flächengebilde aus Vlies, ebenso sogenannte Maschenware, wie Gewirke und Gestricke, aber auch nicht maschige Gebinde wie Gewebe, Gelege oder Geflechte. Außerdem unterscheidet man Langfaser- und Kurzfasermaterialien als Träger. Ebenfalls erfindungsgemäß geeignet sind Rovings und Garne. Alle genannten Materialien sind im Rahmen der Erfindung als Faser förmiger Träger geeignet.

Einen Überblick über Verstärkungsfasern enthält "Composites Technologien, Paolo Ermanni (Version 4), Script zur Vorlesung ETH Zürich, August 2007, Kapitel 7.

### Matrixmaterial

Geeignete Polyurethanzusammensetzungen bestehen erfindungsgemäß aus Mischungen aus einem funktionellen Gruppen - reaktiv gegenüber NCO-Gruppen - aufweisenden Polymeren b) (Binder), auch als Harz bezeichnet, und temporär deaktivierte, das heißt intern blockierte und/oder mit Blockierungsmitteln blockierte Di- oder Polyisocyanate, auch als Härter a) (Komponente) bezeichnet.

Als funktionelle Gruppen der Polymeren b) (Binder) sind Hydroxylgruppen, Aminogruppen und Thiolgruppen geeignet, welche mit den freien Isocyanatgruppen unter Addition reagieren und somit die Polyurethanzusammensetzung vernetzt und aushärtet. Die Binderkomponenten müssen einen Festharzcharakter (Glastemperatur größer als die Raumtemperatur) haben. Als Binder kommen in Frage Polyester, Polyether, Polyacrylate, Polycarbonate und Polyurethane mit einer OH-Zahl von 20 bis 500 mg KOH/Gramm und einer mittleren Molmasse von 250 bis 6000 g/Mol. Besonders bevorzugt werden hydroxylgruppenhaltige Polyester oder Polyacrylate mit einer OH-Zahl von 20 bis 150 mg KOH/Gramm und einem mittleren Molekulargewicht von 500 bis 6000 g/mol. Selbstverständlich können auch Mischungen solcher Polymere eingesetzt werden. Die Menge an den funktionelle Gruppen aufweisenden Polymeren b) wird so gewählt, dass auf jede funktionelle Gruppe der Komponente b) 0,3 bis 0,7 Uretdiongruppe der Komponente a) entfällt.

Als Härterkomponente a) kommen mit Blockierungsmitteln blockierte oder intern blockierte (Uretdion) Di- und Polyisocyanate in Frage.

Die erfindungsgemäß eingesetzten Di- und Polyisocyanate können aus beliebigen aromatischen, aliphatischen, cycloaliphatischen und/oder (cyclo)aliphatischen Di- und/oder Polyisocyanaten bestehen.

Als aromatische Di- oder Polyisocyanate sind prinzipiell alle bekannten aromatischen Verbindungen geeignet. Besonders geeignet sind 1,3- und 1,4-Phenylendiisocyanat, 1,5-Naphthylen-diisocyanat, Tolidindiisocyanat, 2,6-Toluylendiisocyanat, 2,4-Toluylendiisocyanat (2,4-TDI), 2,4'-Diphenylmethandiisocyanat (2,4'-MDI), 4,4'-Diphenylmethandiisocyanat, die Mischungen aus monomeren Diphenylmethandüsocyanaten (MDI) und oligomeren Diphenylmethandiisocyanaten (Polymer-MDI), Xylylendiisocyanat, Tetramethylxylylendiisocyanat und Triisocyanatotoluol.

Geeignete aliphatische Di- oder Polyisocyanate besitzen vorteilhafterweise 3 bis 16 Kohlenstoffatome, vorzugsweise 4 bis 12 Kohlenstoffatome, im linearen oder verzweigten Alkylenrest und geeignete cycloaliphatische oder (cyclo)aliphatische Diisocyanate vorteilhafterweise 4 bis 18 Kohlenstoffatome, vorzugsweise 6 bis 15 Kohlenstoffatome, im Cycloalkylenrest. Unter (cyclo)aliphatischen Diisocyanaten versteht der Fachmann hinlänglich gleichzeitig cyclisch und aliphatisch gebundene NCO-Gruppen, wie es z. B. beim Isophorondiisocyanat der Fall ist. Demgegenüber versteht man unter cycloaliphatischen Diisocyanaten solche, die nur direkt am cycloaliphatischen Ring gebundene NCO-Gruppen aufweisen, z. B. H₁₂MDI. Beispiele sind Cyclohexandiisocyanat, Methylcyclohexandiisocyanat, Ethylcyclohexandiisocyanat, Propylcyclohexandiisocyanat, Methyldiethylcyclohexandiisocyanat, Propandiisocyanat, Butandiisocyanat, Pentandiisocyanat, Hexandiisocyanat, Heptandiisocyanat, Octandiisocyanat, Nonandiisocyanat, Nonantriisocyanat, wie 4-Isocyanatomethyl-1,8-octandiisocyanat (TIN), Dekandi- und triisocyanat, Undekandi- und -triisocyanat, Dodecandi- und -triisocyanat.

Bevorzugt werden Isophorondiisocyanat (IPDI), Hexamethylendiisocyanat (HDI), Diisocyanatodicyclohexylmethan (H₁₂MDI), 2-Methylpentandiisocyanat (MPDI), 2,2,4-Trimethylhexamethylendiisocyanat/2,4,4-Trimethylhexamethylendiisocyanat (TMDI), Norbornandiisocyanat (NBDI). Ganz besonders bevorzugt werden IPDI, HDI, TMDI und H₁₂MDI eingesetzt, wobei auch die Isocyanurate einsetzbar sind.

Ebenfalls geeignet sind 4-Methyl-cyclohexan-1,3-diisocyanat, 2-Butyl-2-ethylpentamethylen-diisocyanat, 3(4)-Isocyanatomethyl-1-methylcyclohexyl-isocyanat, 2-Isocyanatopropylcyclohexylisocyanat, 2,4'-Methylen-bis(cyclohexyl)diisocyanat, 1,4-Diisocyanato-4-methyl-pentan.

Selbstverständlich können auch Gemische der Di- und Polyisocyanate eingesetzt werden.

Weiterhin werden vorzugsweise Oligo- oder Polyisocyanate verwendet, die sich aus den genannte Di- oder Polyisocyanaten oder deren Mischungen durch Verknüpfung mittels Urethan-, Allophanat-, Hamstoff-, Biuret-, Uretdion-, Amid-, Isocyanurat-, Carbodiimid-, Uretonimin-, Oxadiazintrion- oder Iminooxadiazindion-Strukturen herstellen lassen. Besonders geeignet sind Isocyanurate, insbesondere aus IPDI und HDI.

Die erfindungsgemäß verwendeten Polyisocyanate sind blockiert. In Frage kommen dazu externe Blockierungsmittel, wie z. B. Acetessigsäureethylester, Diisopropylamin, Methylethylketoxim, Malonsäurediethylester, ε-Caprolactam, 1,2,4-Triazol, Phenol bzw. substituierte Phenole und 3,5-Dimethylpyrazol.

Die bevorzugt verwendeten Härterkomponente sind IPDI-Addukte, die Isocyanurat-Gruppierungen und ε-Caprolactam blockierte Isocyanatstrukturen enthalten.

Auch eine interne Blockierung ist möglich und diese wird bevorzugt verwendet. Die interne Blockierung erfolgt über eine Dimerbildung über Uretdion-Strukturen, die bei erhöhter Temperatur wieder in die ursprünglich vorhandenen Isocyanat-Strukturen zurückspalten und damit die Vernetzung mit dem Binder in Gang setzen.

Optional können die reaktiven pulverförmigen Polyurethanzusammensetzungen zusätzliche Katalysatoren enthalten. Es handelt sich hierbei um metallorganischen Katalysatoren, wie z. B. Dibutylzinndilaurat, Zinnoctoat, Bismuthneodecanoat, oder aber tertiäre Amine, wie z. B. 1,4-Diazabicylco[2.2.2.]octan, in Mengen von 0,001 - 1 Gew.-%.

Für die Herstellung der reaktiven pulverförmigen Polyurethanzusammensetzungen können die in der Pulvertechnologie üblichen Zusatzstoffe, wie Verlaufsmittel, z. B. Polysilicone oder Acrylate, Lichtschutzmittel z. B. sterisch gehinderte Amine, oder andere Hilfsmittel, wie sie z. B. in EP 669 353 beschrieben wurden, in einer Gesamtmenge von 0,05 bis 5 Gew.-% zugesetzt werden. Füllstoffe und Pigmente wie z. B. Titandioxid können in einer Menge bis zu 30 Gew.-% der Gesamtzusammensetzung zugesetzt werden.

Reaktiv bedeutet im Rahmen dieser Erfindung, dass die erfindungsgemäß eingesetzten Polyurethanzusammensetzungen bei Temperaturen ab 160 °C, und zwar je nach Art des Trägers aushärten.

Die erfindungsgemäß eingesetzten reaktiven pulverförmigen Polyurethanzusammensetzungen werden bei normalen Bedingungen, z. B. mit DBTL-Katalyse, ab 160 °C, üblicherweise ab ca. 180 °C ausgehärtet. Die Zeit zur Aushärtung der erfindungsgemäß eingesetzten Polyurethanzusammensetzung liegt in der Regel innerhalb von 5 bis 60 Minuten.

Gegenstand der vorliegenden Erfindung sind Prepregs mit einem Matrixmaterial aus einer reaktiven pulverförmigen Uretdiongruppen haltigen Polyurethanzusammensetzungen, im Wesentlichen enthaltend
a) mindestens einen Uretdiongruppen haltigen Härter, basierend auf Polyadditionsverbindungen aus aliphatischen, (cyclo)aliphatischen oder cycloaliphatischen Uretdiongruppen enthaltende Polyisocyanaten und hydroxylgruppenhaltigen Verbindungen, wobei der Härter unterhalb von 40 °C in fester Form und oberhalb von 125 °C in flüssiger Form vorliegt und einen freien NCO-Gehalt von kleiner 5 Gew.-% und einem Uretdiongehalt von 3 - 25 Gew.-% aufweist,
b) mindestens ein hydroxylgruppenhaltiges Polymer, das unterhalb von 40°C in fester Form und oberhalb von 125 °C in flüssiger Form vorliegt und einer OH-Zahl zwischen 20 und 200 mg KOH / Gramm,
c) gegebenenfalls mindestens einen Katalysator,
d) gegebenenfalls aus der Polyurethanchemie bekannte Hilfs- und Zusatzstoffe,
so dass die beiden Komponenten a) und b) in dem Verhältnis vorliegen, dass auf jede Hydroxylgruppe der Komponente b) 0,3 bis 0,7 Uretdiongruppe der Komponente a) entfällt, bevorzugt 0,45 bis 0,55. Letzteres entspricht einem NCO/OH-Verhältnis von 0,9 bis 1,1 zu 1.

Uretdiongruppen enthaltende Polyisocyanate sind wohlbekannt und werden beispielsweise in US 4,476,054, US 4,912,210, US 4,929,724 sowie EP 417 603 beschrieben. Ein umfassender Überblick über industriell relevante Verfahren zur Dimerisierung von Isocyanaten zu Uretdionen liefert das J. Prakt. Chem. 336 (1994) 185-200. Im Allgemeinen erfolgt die Umsetzung von Isocyanaten zu Uretdionen in Gegenwart löslicher Dimerisierungs-katalysatoren wie z. B. Dialkylaminopyridinen, Trialkylphosphinen, Phosphorigsäure-triamiden oder Imdidazolen. Die Reaktion - optional in Lösemitteln, bevorzugt aber in Abwesenheit von Lösemitteln durchgeführt - wird bei Erreichen eines gewünschten Umsatzes durch Zusatz von Katalysatorgiften abgestoppt. Überschüssiges monomeres Isocyanat wird im Anschluss durch Kurzwegverdampfung abgetrennt. Ist der Katalysator flüchtig genug, kann das Reaktionsgemisch im Zuge der Monomerabtrennung vom Katalysator befreit werden. Auf den Zusatz von Katalysatorgiften kann in diesem Fall verzichtet werden. Grundsätzlich ist zur Herstellung von Uretdiongruppen enthaltenden Polyisocyanaten eine breite Palette von Isocyanaten geeignet. Es können die oben genannten Di- und Polyisocyanate verwendet werden. Bevorzugt sind aber Di- und Polyisocyanate aus beliebigen aliphatischen, cycloaliphatischen und/oder (cyclo)aliphatischen Di- und/oder Polyisocyanaten. Erfindungsgemäß werden Isophorondiisocyanat (IPDI), Hexamethylendiisocyanat (HDI), Diisocyanatodicyclohexylmethan (H₁₂MDI), 2-Methylpentandiisocyanat (MPDI), 2,2,4-Trimethylhexamethylendiisocyanat/2,4,4-Trimethylhexamethylendiisocyanat (TMDI), Norbornandiisocyanat (NBDI) verwendet. Ganz besonders bevorzugt werden IPDI, HDI, TMDI und H₁₂MDI eingesetzt, wobei auch die Isocyanurate einsetzbar sind.

Ganz besonders bevorzugt wird für das Matrixmaterial IPDI und HDI verwendet.

Die Umsetzung dieser Uretdiongruppen enthaltenden Polyisocyanate zu Uretdiongruppen haltigen Härtern a) beinhaltet die Reaktion der freien NCO-Gruppen mit hydroxylgruppenhaltigen Monomeren oder Polymeren, wie z. B. Polyestern, Polythioethern, Polyethern, Polycaprolactamen, Polyepoxiden, Polyesteramiden, Polyurethanen oder nieder-molekularen Di-, Tri- und/oder Tetraalkoholen als Kettenverlängerer und gegebenenfalls Monoaminen und/oder Monoalkoholen als Kettenabbrecher und wurde schon häufig beschrieben (EP 669 353, EP 669 354, DE 30 30 572, EP 639 598 oder EP 803 524). Bevorzugte Uretdiongruppen aufweisende Härter a) haben einen freien NCO-Gehalt von weniger als 5 Gew.-% und einen Gehalt an Uretdiongruppen von 3 bis 25 Gew.-%, bevorzugt 6 bis 18 Gew.-% (berechnet als C₂N₂O₂, Molekulargewicht 84). Bevorzugt werden Polyester und monomere Dialkohole. Außer den Uretdiongruppen können die Härter auch Isocyanurat-, Biuret-, Allophanat-, Urethan- und/oder Harnstoff-Strukturen aufweisen.

Bei den hydroxylgruppenhaltigen Polymeren b) werden bevorzugt Polyester, Polyether, Polyacrylate, Polyurethane und/oder Polycarbonate mit einer OH-Zahl von 20 - 200 in mg KOH/Gramm eingesetzt. Besonders bevorzugt werden Polyester mit einer OH-Zahl von 30 - 150, einem mittleren Molekulargewicht von 500 - 6000 g/mol, die unterhalb von 40 °C in fester Form und oberhalb von 125 °C in flüssiger Form vorliegen, verwendet. Solche Bindemittel sind beispielsweise in EP 669 354 und EP 254 152 beschrieben worden. Selbstverständlich können auch Mischungen solcher Polymere eingesetzt werden. Die Menge an den hydroxylgruppenhaltigen Polymeren b) wird so gewählt, dass auf jede Hydroxylgruppe der Komponente b) 0,3 bis 0,7 Uretdiongruppe der Komponente a), bevorzugt 0,45 bis 0,55, entfällt.

Optional können in reaktiven pulverförmigen Polyurethanzusammensetzungen zusätzliche Katalysatoren c) enthalten sein. Es handelt sich hierbei um metallorganischen Katalysatoren, wie z. B. Dibutylzinndilaurat, Zinkoctoat, Bismuthneodecanoat, oder aber tertiäre Amine, wie z. B. 1,4-Diazabicylco[2.2.2.]octan, in Mengen von 0,001 - 1 Gew.-%.

Für die Herstellung der reaktiven pulverförmigen Polyurethanzusammensetzungen können die in der Pulverlacktechnologie üblichen Zusatzstoffe d) wie Verlaufsmittel, z. B. Polysilicone oder Acrylate, Lichtschutzmittel z. B. sterisch gehinderte Amine, oder andere Hilfsmittel, wie sie z. B. in EP 669 353 beschrieben wurden, in einer Gesamtmenge von 0,05 bis 5 Gew.-% zugesetzt werden. Füllstoffe und Pigmente wie z. B. Titandioxid können in einer Menge bis zu 30 Gew.-% der Gesamtzusammensetzung zugesetzt werden.

Die erfindungsgemäß eingesetzten reaktiven pulverförmigen Polyurethanzusammensetzungen werden bei normalen Bedingungen, z. B. mit DBTL-Katalyse, ab 160 °C, üblicherweise ab ca. 180 °C ausgehärtet.

Die erfindungsgemäß eingesetzten reaktiven Polyurethanzusammensetzungen bieten einen sehr guten Verlauf und damit eine gute Imprägnierfähigkeit und im ausgehärteten Zustand eine ausgezeichnete Chemikalienbeständigkeit. Bei Verwendung von aliphatischen Vernetzern (z. B. IPDI oder H₁₂MDI) wird zusätzlich noch eine gute Witterungsbeständigkeit erreicht.

Die erfindungsgemäß als Matrixmaterial verwendeten reaktiven pulverförmigen Polyurethanzusammensetzungen liegen bei Raumtemperatur in fester pulvriger und nicht klebriger Form vor. Sie bestehen im Wesentlichen aus einer Mischung aus einem reaktiven Harz und einem Härter. Diese Mischung hat einen Tg von mindestens 40 °C und reagiert in der Regel erst oberhalb von 160 °C zu einem vernetzten Polyurethan und bildet somit die Matrix des Composites. Das bedeutet, dass die erfindungsgemäßen Prepregs nach ihrer Herstellung aus dem Träger und der applizierten reaktiven pulverförmigen Polyurethanzusammensetzung als Matrixmaterial, welche in unvemetzter aber reaktiven Form vorliegt, aufgebaut sind. Die Prepregs sind also lagerstabil, in der Regel mehrere Tage und sogar Wochen und können somit jederzeit zu Composites weiterverarbeitet werden. Dies ist der wesentliche Unterschied zu den bereits oben beschriebenen 2-Komponenten, die reaktiv und nicht lagerstabil sind, da diese nach dem Aufbringen sofort zu Polyurethanen reagieren und vernetzen

Die Homogenisierung aller Bestandteile zur Herstellung der Polyurethanzusammensetzung zur Herstellung der Prepregs kann in geeigneten Aggregaten, wie z. B. beheizbaren Rührkesseln, Knetern, oder auch Extrudern, erfolgen, wobei Temperaturobergrenzen von 120 bis 130 °C nicht überschritten werden sollten. Die Mischung der einzelnen Komponenten erfolgt bevorzugt in einem Extruder bei Temperaturen, die zwar oberhalb der Schmelzbereiche der einzelnen Komponenten liegen, aber unterhalb der Temperatur, bei der die Vernetzungsreaktion startet. Die entstandenen erstarrten Massen werden vermahlen und können z. B. durch Siebung in verschiedene Fraktionen aufgetrennt werden (z. B. Durchmesser der Partikel <63 µm, 63-100µm, >100µm).

Gegenstand der Erfindung ist auch die Verwendung der erfindungsgemäßen reaktiven pulverförmigen Polyurethanzusammensetzung B) zur Herstellung von Prepregs, insbesondere mit Faser förmigen Trägern (Faserverstärkungen) aus Glas-, Kohle- oder Aramid-Fasern und die daraus hergestellten Composites.

Die Herstellung der Prepregs kann im Prinzip nach beliebigen Verfahren bevorzugt durch Pulverimprägnierung erfolgen. Geeigneter Weise wird dabei die reaktive pulverförmige Polyurethanzusammensetzung durch ein Streuverfahren auf den Träger aufgebracht. Möglich sind auch Wirbelsinterverfahren, Pultrusion, oder Sprühverfahren.

Bei der Pulverimprägnierung liegt das Matrixmaterial - normalerweise Thermoplast - Polymer in Pulverform vor. Um nur möglichst kurze Fließwege der hochviskosen Schmelze von thermoplastischen Matrixsystemen zur Benetzung und Umhüllung der Fasern zu ermöglichen, ist es gemäß des Standes der Technik üblich, dass im Wirbelbettverfahren das Thermoplastpulver in strömender Luft dispergiert und das Filamentgam im Luftstrom gespreizt wird. Damit können die einzelnen Pulverpartikel bis zu den Einzel-Fasern gebracht werden. Durch elektrostatische Aufladung des Pulvers kann das Anhaften des Pulvers zusätzlich verbessert werden. Nach dem Durchlaufen des Wirbelbettes wird das Filamentgam mit dem leicht anhaftenden Pulver durch eine Heizstrecke geführt, in dem das Matrixpolymerpulver angeschmolzen wird. Im Anschluss muss ein Konsolidierungsschritt bei der Herstellung der Composite-Bauteile die Benetzung der Filamente vervollständigen.

Bei der erfindungsgemäßen Verwendung der erfindungsgemäßen reaktiven pulverförmigen Polyurethanzusammensetzung sind derartige Verfahren zur Fließwegverkürzung nicht unbedingt notwendig, da die Schmelze der Präpolymere (unvernetzte Pulverlackschmelze) eine geeignet niedrige Viskosität besitzt, um die Faserbenetzung zu ermöglichen, was einen erheblichen Vorteil der erfindungsgemäßen Prepregs gegenüber dem Stand der Technik darstellt.

Das Pulver (gesamt oder eine Fraktion) wird bevorzugt über Streuverfahren auf den Faser förmigen Träger, z. B. auf Bahnen aus Glas-, Kohle-, oder Aramid-Fasergelege/-gewebe, aufgebracht und anschließend fixiert. Zur Vermeidung von Pulververlusten wird bevorzugt direkt nach dem Streuvorgang in einer Heizstrecke (z. B. mit IR-Strahlern) der mit Pulver beaufschlagte Faser förmige Träger erwärmt, sodass ein Ansintem der Partikel erfolgt, wobei Temperaturen von 80 bis 100 °C nicht überschritten werden sollten, um ein Anreagieren des reaktiven Matrixmaterials zu verhindern. Diese Prepregs können je nach Bedarf zu unterschiedlichen Formen kombiniert und zugeschnitten werden.

Gegenstand der Erfindung ist ein Verfahren zur Herstellung von Prepregs durch Aufbringen, bevorzugt durch Streuverfahren, der Komponente B) auf die Komponente A) gegebenenfalls Fixieren von B) bevorzugt durch Wärmeeinwirkung, besonders bevorzugt durch Ansintem.

Zur Konsolidierung der Prepreg-Lagen zu einem einzigen Composite (Bauteil) und zur Vernetzung des erfindungsgemäßen Matrixmaterials zur Matrix werden die Prepregs zugeschnitten, gegebenenfalls vernäht oder anderweitig fixiert und in einer geeigneten Form unter Druck und gegebenenfalls Anlegen von Vakuum verpresst. Im Rahmen dieser Erfindung erfolgt dieser Vorgang der Herstellung der Composites aus dem erfindungsgemäßen Prepregs je nach Aushärtungszeit bei Temperaturen von oberhalb etwa 160 °C.

Gegenstand der Erfindung ist auch die Verwendung der Prepregs, im Wesentlichen aufgebaut aus
A) mindestens einem Faser förmigen Träger
   und
B) mindestens einer reaktiven pulverförmigen Polyurethanzusammensetzung als Matrixmaterial
zur Herstellung von Composites im Boots- und Schiffbau, in der Luft- und Raumfahrtechnik, im Automobilbau, für Zweiräder, bevorzugt Motorräder und Fahrräder, in den Bereichen Automotive, Construction, Medizintechnik, Sport, Elektro- und Elektronik-Industrie, Energieerzeugungsanlagen, z. B. für Rotorblätter bei Windkraftanlagen.

Gegenstand der Erfindung sind auch die aus den erfindungsgemäßen Prepregs hergestellten Composite-Bauteile gemäß Anspruch 14.

Gegenstand der Erfindung ist auch ein Verfahren zu Herstellung von Composite-Bauteilen, wobei ein Prepreg, aufgebaut aus
A) mindestens einem Faser förmigen Träger
   und
B) mindestens einer reaktiven pulverförmigen Polyurethanzusammensetzung, bevorzugt Uretdiongruppen haltigen Polyurethanzusammensetzung, als Matrixmaterial;
bei Temperaturen von oberhalb 160 °C, bevorzugt 180 °C, gegebenenfalls unter Anwendung von Druck und/oder Vakuum, hergestellt wird.

Nachfolgend wird die Erfindung durch Beispiele erläutert.

### Beispiele

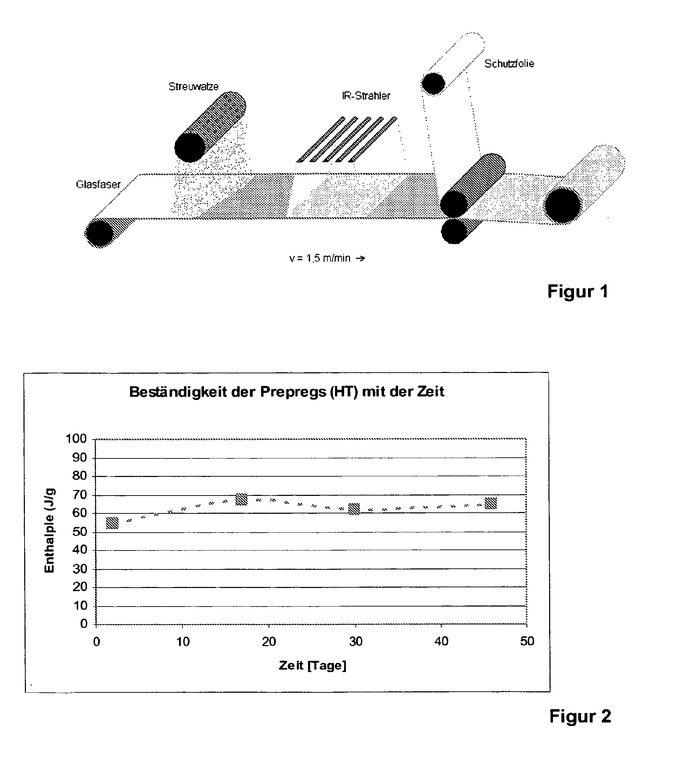

### Abbildung der verwendeten Laborstreueinrichtung (Villars Minicoater 200) Figur 1

### Verwendete Glasfasergelege/-gewebe:

Folgende Glasfasergelege/-gewebe wurden in den Beispielen verwendet, nachfolgend mit Typ I und Typ II bezeichnet.

Bei Typ I handelt es sich um ein Leinwand-E-Glas-Gewebe 281 L Art.Nr. 3103 der Firma "Schlösser & Cramer". Das Gewebe hat ein Flächengewicht von 280 g/m². Beim Typ II GBX 600 Art.Nr. 1023 handelt es sich um ein vernähtes biaxiales E-Glas-Gelege (-45/+45) der Firma "Schlösser & Cramer". Darunter sind zwei Lagen von Faserbündeln zu verstehen, die übereinander liegen und zueinander in einem Winkel von 90 Grad versetzt sind. Dieser Aufbau wird von weiteren Fasern zusammen gehalten, die allerdings nicht aus Glas bestehen. Die Oberfläche der Glasfasern ist mit einer Standardschlichte ausgestattet, die aminosilanmodifiziert ist. Das Gelege hat ein Flächengewicht von 600 g/m².

### DSC-Messungen

Die DSC-Untersuchungen (Glasübergangstemperatur-Bestimmungen und Reaktionsenthalpie-Messungen) wurden mit einem Mettler Toledo DSC 821 e nach DIN 53765 durchgeführt.

### Reaktive pulverförmige Polyurethanzusammensetzung

Es wurde eine reaktive pulverförmige Polyurethanzusammensetzung mit der folgenden Rezeptur zur Herstellung der Prepregs und der Composites verwendet.

### (Angaben in Gew.-%):

| **Beispiele** | **Formulierung HT (erfindungsgemäß)** |
|---|---|
| VESTAGON BF 9030 (uretdiongruppenhaltige Härterkomponente a)), Evonik Degussa | 26,81 |
| FINEPLUS PE 8078 VKRK20 (OH-funktionelle Polyesterharzkomponenten b)), Firma DIC | 72,69 |
| BYK 361 N | 0,5 |
| NCO : OH-Verhältnis | 1 : 1 |

Die zerkleinerten Einsatzstoffe aus der Tabelle werden in einem Vormischer innig vermischt und anschließend im Extruder bis maximal 130 °C homogenisiert. Nach dem Erkalten wird das Extrudat gebrochen und mit einer Stiftsmühle gemahlen. Die verwendeten Siebfraktionen hatten mittlere Partikeldurchmesser zwischen 63 und 100 µm.

### Physikalische Eigenschaften

| | **HT-Pulver** |
|---|---|
| T_{g} [°C] | ca. 53 |
| Schmelzbereich [°C] | um 94 |
| Aushärtungstemperatur [°C] | 170 - 180 |
| Bruchdehnung der ausgehärteten Polyurethanmatrix [%] | 8 |
| E-Modul der ausgehärteten Polyurethanmatrix [MPa] | ca. 870 |
| Volumenschrumpf durch Vernetzung | < 0,2 % |
| Viskositäts-Minimum der unvernetzten Schmelze | 158 °C/30 Pa·s |

Durch die Auswahl geeigneter Sinterbedingungen während diverser Vorversuche erwiesen sich folgende Einstellungen bei der Herstellung der Prepregs am Minicoater als gut geeignet:

Es wurden etwa 150 g/Pulver auf einen Quadratmeter Glasfasergelege bei einer Bahngeschwindigkeit von ca. 1,2 m/min aufgetragen. Dies entspricht einer Schichtdicke von etwa 500 µm mit einer Standardabweichung von etwa 45 µm.

Bei einer Leistung der IR-Strahler von 560 W konnten so Prepregs bei Temperaturen zwischen 75 und 82 °C hergestellt werden, wobei die reaktive pulverförmige Polyurethanzusammensetzung angesintert wurde, wobei unerheblich war, ob die Pulver mit noch erkennbarer Pulverstruktur nur angesintert wurden, oder sich eine komplette Schmelze auf dem Glasfasergelege ergab, solange die Reaktivität der pulverförmigen Polyurethanzusammensetzung erhalten blieb.

### Lagerstabilität der Prepregs

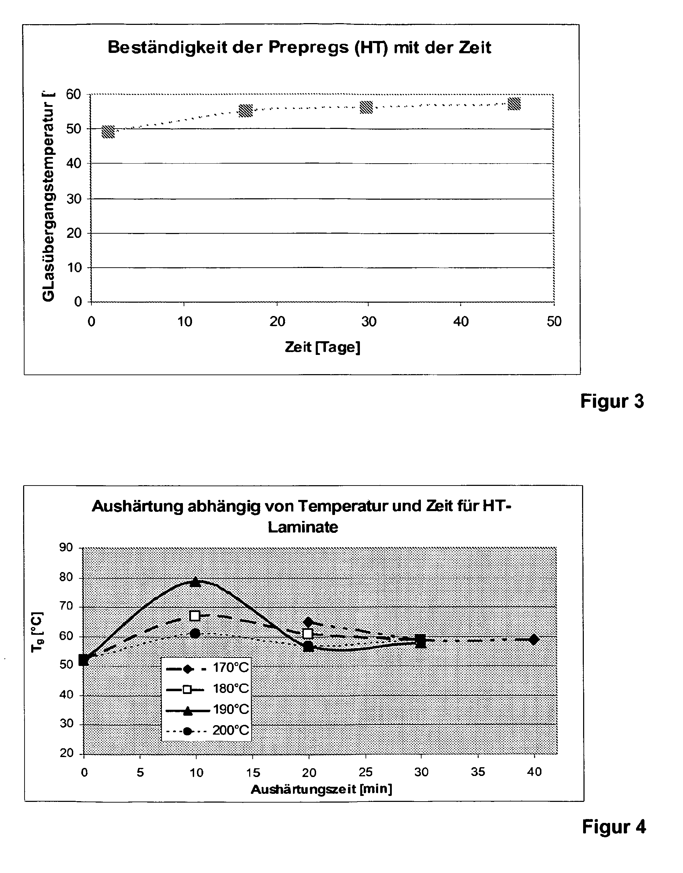

Die Lagerstabilität der Prepregs wurde anhand der Reaktionsenthalpien der Vernetzungsreaktion mittels DSC-Untersuchungen bestimmt. Die Ergebnisse sind in Figur 2 und Figur 3 dargestellt.

Die Vernetzungsfähigkeit der PU-Prepregs wird durch die Lagerung bei Raumtemperatur zumindest über einen Zeitraum von 7 Wochen nicht beeinträchtigt.

### Composite-Bauteil-Herstellung

Die Composite-Bauteile wurden über eine dem Fachmann bekannte Presstechnik auf einer Composite-Presse hergestellt. Die an der Streuanlage hergestellten, homogenen Prepregs wurden an einer Tischpresse zu Verbundwerkstoffen verpresst. Bei dieser Tischpresse handelt es sich um die Polystat 200 T der Firma Schwabenthan, mit der die Prepregs bei Temperaturen zwischen 120 und 200 °C zu den entsprechenden Composite-Platten verpresst wurden. Der Druck wurde zwischen Normaldruck und 450 bar variiert. Dynamische Verpressungen, d. h. wechselnde Druckbeaufschlagungen können sich je nach Bauteil-Größe, -Dicke und Polyurethanzusammensetzung und damit der Viskositätseinstellung bei der Verarbeitungstemperatur für die Benetzung der Fasern als vorteilhaft erweisen. In einem Beispiel wurde die Temperatur der Presse von 90 °C während der Aufschmelzphase auf 110 °C erhöht, der Druck wurde nach einer Aufschmelzphase von 3 Minuten auf 440 bar erhöht und anschließend dynamisch (7 mal mit jeweils 1 Minute Dauer) zwischen 150 und 440 bar variiert, wobei die Temperatur kontinuierlich auf 140 °C erhöht wurde. Anschließend wurde die Temperatur auf 170 °C angehoben und gleichzeitig der Druck bei 350 bar bis zur Entnahme des Composite-Bauteils aus der Presse nach 30 Minuten Höhe gehalten wurde.

Die erhaltenen harten, steifen, chemikalienbeständigen und schlagzähen Composite-Bauteile (Plattenware) mit einem Faservolumenanteil von > 50 % wurden hinsichtlich des Aushärtungsgrades (Bestimmung über DSC) untersucht. Die Bestimmung der Glastemperatur der ausgehärteten Matrix zeigt den Fortschritt der Vernetzung bei unterschiedlichen Härtungstemperaturen. Bei der verwendeten Polyurethanzusammensetzung ist nach ca. 25 Minuten die Vernetzung vollständig, wobei dann auch keine Reaktionsenthalpie für die Vernetzungsreaktion mehr detektierbar ist. Die Ergebnisse sind in Figur 4 dargestellt.

Zwei Verbundwerkstoffe wurden bei exakt gleichen Bedingungen hergestellt und anschließend deren Eigenschaften bestimmt und verglichen. Diese gute Reproduzierbarkeit der Eigenschaften konnte auch bei der Bestimmung der interlaminaren Scherfestigkeit (ILSF) bestätigt werden. Hier wurde eine gemittelte ILSF von ca. 40 N/mm² erreicht.

## Patentansprüche

1. Prepregs, im Wesentlichen aufgebaut aus
A) mindestens einem Typ Verstärkungsfaser
und
B) mindestens einer pulverförmigen Polyurethanzusammensetzung als Matrixmaterial im Wesentlichen enthaltend
a) mindestens einen Uretdiongruppen haltigen Härter, basierend auf Polyadditionsverbindungen aus aliphatischen, (cyclo)aliphatischen oder cycloaliphatischen Uretdiongruppen enthaltende Polyisocyanaten und hydroxylgruppenhaltigen Verbindungen, wobei der Härter unterhalb von 40 °C in fester Form und oberhalb von 125 °C in flüssiger Form vorliegt, einen freien NCO-Gehalt von kleiner 5 Gew.-% und einem Uretdiongehalt von 3 - 25 Gew.-% aufweist,
b) mindestens ein hydroxylgruppenhaltiges Polymer, das unterhalb von 40 °C in fester Form und oberhalb von 125 °C in flüssiger Form vorliegt und einer OH-Zahl zwischen 20 und 200 mg KOH / Gramm,
c) gegebenenfalls mindestens einen Katalysator,
d) gegebenenfalls aus der Polyurethanchemie bekannte Hilfs- und Zusatzstoffe,
so dass die beiden Komponenten a) und b) in dem Verhältnis vorliegen, dass auf jede Hydroxylgruppe der Komponente b) 0,3 bis 0,7 Uretdiongruppe der Komponente a) entfällt, bevorzugt 0,45 bis 0,55.

2. Prepregs nach Anspruch 1,
wobei das Matrixmaterial einen Tg von mindestens 40 °C aufweist.

3. Prepregs nach mindestens einem der vorherigen Ansprüche,
**dadurch gekennzeichnet,**
**dass** in dem wenigstens einen Typ Verstärkungsfaser Material aus Glas, Kohlenstoff, Kunststoffen, wie Polyamind (Aramid) oder Polyester, Naturfasern, oder mineralischen Fasermaterialien wie Basaltfasern oder keramische Fasern enthalten ist.

4. Prepregs nach mindestens einem der vorherigen Ansprüche,
**dadurch gekennzeichnet,**
**dass** als wenigstens ein TypVerstärkungsfaser textile Flächengebilde aus Vlies, Maschenware, Gewirke und Gestricke, nicht maschige Gebinde wie Gewebe, Gelege oder Geflechte, als Langfaser- und Kurzfasermaterialien, enthalten sind.

5. Prepregs nach mindestens einem der vorherigen Ansprüche,
**dadurch gekennzeichnet,**
**dass** die pulverförmigen Polyurethanzusammensetzungen im Wesentlichen Mischungen aus einem gegenüber Isocyanaten reaktive funktionelle Gruppen aufweisenden Polymeren b) als Binder und intern blockierten und/oder mit Blockierungsmitteln blockierten Di- oder Polyisocyanat als Härter a) enthalten.

6. Prepregs nach mindestens einem der vorherigen Ansprüche,
**dadurch gekennzeichnet,**
**dass** Polymere mit Hydroxylgruppen, Aminogruppen und Thiolgruppen insbesondere Polyester, Polyether, Polyacrylate, Polycarbonate und Polyurethane mit einer OH-Zahl von 20 bis 500 mg KOH/Gramm und einer mittleren Molmasse von 250 bis 6000 g/Mol eingesetzt werden.

7. Prepregs nach mindestens einem der vorherigen Ansprüche,
**dadurch gekennzeichnet,**
**dass** Di- oder Polyisocyanate, ausgewählt aus Isophorondiisocyanat (IPDI), Hexamethylendiisocyanat (HDI), Diisocyanatodicyclohexylmethan (H₁₂MDI), 2-Methylpentandiisocyanat (MPDI), 2,2,4-Trimethylhexamethylendiisocyanat/2,4,4-Trimethylhexamethylendiisocyanat (TMDI) und/oder Norbornandiisocyanat (NBDI), besonders bevorzugt IPDI, HDI, TMDI und H₁₂MDI, wobei auch die Isocyanurate einsetzbar sind, eingesetzt werden.

8. Prepregs nach mindestens einem der vorherigen Ansprüche,
**dadurch gekennzeichnet,**
**dass** externe Blockierungsmittel, ausgewählt aus Acetessigsäureethylester, Diisopropylamin, Methylethylketoxim, Malonsäurediethylester, ε-Caprolactam, 1,2,4-Triazol, Phenol oder substituierte Phenole und/oder 3,5-Dimethylpyrazol, eingesetzt werden.

9. Prepregs nach mindestens einem der vorherigen Ansprüche,
**dadurch gekennzeichnet,**
**dass** IPDI-Addukte, die Isocyanurat-Gruppierungen und ε-Caprolactam blockierte Isocyanatstrukturen, eingesetzt werden.

10. Prepregs nach mindestens einem der vorherigen Ansprüche,
**dadurch gekennzeichnet,**
**dass** die pulverförmigen Polyurethanzusammensetzungen B) zusätzliche Katalysatoren enthalten, bevorzugt Dibutylzinndilaurat, Zinkoctoat, Bismuthneodecanoat, und/oder tertiäre Amine, bevorzugt 1,4-Diazabicylco[2.2.2.]octan, in Mengen von 0,001 - 1 Gew.-%.

11. Verwendung der pulverförmigen Polyurethanzusammensetzung B) nach mindestens einem der Ansprüche 5 bis 10 zur Herstellung von Prepregs, insbesondere mit Verstärkungsfasern aus Glas-, Kohle- oder Aramid-Fasern.

12. Verfahren zur Herstellung von Prepregs nach mindestens einem der vorherigen Ansprüche 1 bis 10 durch Aufbringen, bevorzugt durch Streuverfahren, der Komponente B) auf die Komponente A), gegebenenfalls Fixieren von B) bevorzugt durch Wärmeeinwirkung, besonders bevorzugt durch Ansintern.

13. Verwendung der Prepregs nach mindestens einem der Ansprüche 1 bis 10,
im Wesentlichen aufgebaut aus
A) mindestens einem Typ Verstärkungsfaser
und
B) mindestens einer pulverförmigen Polyurethanzusammensetzung als
Matrixmaterial
zur Herstellung von Composites im Boots- und Schiffbau, in der Luft- und Raumfahrtechnik, im Automobilbau, für Zweiräder bevorzugt Motorräder und Fahrräder, in den Bereichen Automotive, Construction, Medizintechnik, Sport, Elektro- und Elektronik-Industrie, Energieerzeugungsanlagen, wie für Rotorblätter bei Windkraftanlagen.

14. Composite-Bauteile,
umfassend weiterverarbeitete Prepregs nach einem der Ansprüche 1 bis 10.

15. Verfahren zur Herstellung von Composite-Bauteilen nach Anspruch 14, wobei ein Prepreg, aufgebaut aus
A) mindestens einem Typ Verstärkungsfaser
und
B) mindestens einer pulverförmigen Polyurethanzusammensetzung, bevorzugt Uretdiongruppen haltigen Polyurethanzusammensetzung, als Matrixmaterial
bei Temperaturen von oberhalb 160 °C, bevorzugt 180 °C, gegebenenfalls unter Anwendung von Druck und/oder Vakuum, hergestellt wird.

## Claims

1. Prepregs essentially made up of
A) at least one type of reinforcing fibre
and
B) at least one powdery polyurethane composition as matrix material essentially containing
a) at least one curing agent containing uretdione groups, based on polyaddition compounds from aliphatic, (cyclo)aliphatic or cycloaliphatic polyisocyanates containing uretdione groups and hydroxyl group-containing compounds, where the curing agent exists in solid form below 40°C and in liquid form above 125°C, and has a free NCO content of less than 5 wt.% and a uretdione content of 3 - 25 wt.%,
b) at least one hydroxyl group-containing polymer, which exists in solid form below 40°C and in liquid form above 125°C and has an OH number between 20 and 200 mg KOH / gram,
c) optionally at least one catalyst,
d) optionally auxiliary substances and additives known from polyurethane chemistry,
so that the two components a) and b) are present in the ratio such that for every hydroxyl group of the component b) 0.3 to 0.7 uretdione group of the component a) is consumed, preferably 0.45 to 0.55.

2. Prepregs according to Claim 1,
wherein the matrix material has a Tg of at least 40°C.

3. Prepregs according to at least one of the previous claims,
**characterized in that**
material of glass, carbon, plastics such as polyamide (aramid) or polyester, natural fibres or mineral fibre materials such as basalt fibres or ceramic fibres is contained in the at least one type of reinforcing fibre.

4. Prepregs according to at least one of the previous claims,
**characterized in that**
planar textile bodies of non-woven material, knitted goods, such as hosiery and knitted fabrics, non-knitted skein such as fabric, non-woven or netting, as long fibre and short fibre materials, are contained as at least one type of reinforcing fibre.

5. Prepregs according to at least one of the previous claims,
**characterized in that**
the powdery polyurethane compositions consist essentially of, as binders, mixtures made of a polymer b) which has functional groups reactive towards isocyanates, and, as curing agent a), di- or polyisocyanate which has been internally blocked and/or has been blocked with blocking agents.

6. Prepregs according to at least one of the previous claims,
**characterized in that**
polymers with hydroxyl groups, amino groups and thiol groups, in particular polyesters, polyethers, polyacrylates, polycarbonates and polyurethanes with an OH number of 20 to 500 mg KOH/gram and an average molecular weight of 250 to 6000 g/mol, are used.

7. Prepregs according to at least one of the previous claims,
**characterized in that**
di- or polyisocyanates, selected from isophorone diisocyanate (IPDI), hexamethylene diisocyanate (HDI), diisocyanatodicyclohexylmethane (H₁₂MDI), 2-methylpentane diisocyanate (MPDI), 2,2,4-trimethylhexamethylene diisocyanate/2,4,4-trimethyl-hexamethylene diisocyanate (TMDI) and/or norbornane diisocyanate (NBDI), particularly preferably IPDI, HDI, TMDI and H₁₂MDI, where the isocyanurates are also usable, are used.

8. Prepregs according to at least one of the previous claims,
**characterized in that**
external blocking agents, selected from ethyl acetoacetate, diisopropylamine, methyl ethyl ketoxime, diethyl malonate, ε-caprolactam, 1,2,4-triazole, phenol or substituted phenols and/or 3,5-dimethylpyrazole, are used.

9. Prepregs according to at least one of the previous claims,
**characterized in that**
IPDI adducts which contain isocyanurate groupings and ε-caprolactam blocked isocyanate structures are used.

10. Prepregs according to at least one of the previous claims,
**characterized in that**
the powdery polyurethane compositions B) contain additional catalysts, preferably dibutyltin dilaurate, zinc octoate, bismuth neodecanoate, and/or tertiary amines, preferably 1,4-diazabicyclo[2.2.2]octane, in quantities from 0.001 - 1 wt.%.

11. Use of the powdery polyurethane composition B) according to at least one of Claims 5 to 10 for the production of prepregs, in particular with reinforcing fibres of glass, carbon or aramid fibres.

12. Process for producing prepregs according to at least one of the preceding Claims 1 to 10 by applying, preferably by scattering processes, component B) to component A), and optionally fixing B), preferably by exposure to heat, particularly preferably by incipient sintering.

13. Use of the prepregs according to at least one of Claims 1 to 10,
essentially made up of
A) at least one type of reinforcing fibre
and
B) at least one powdery polyurethane composition as matrix material,
for the production of composites in boat and shipbuilding, in aerospace technology, in automobile manufacture, and for bicycles, preferably motorcycles and cycles, and in the sectors automotive, construction, medical engineering, sport, electrical and electronics industry, and power generating plants, e.g. for rotor blades in wind power plants.

14. Composite components,
comprising further-processed prepregs according to one of Claims 1 to 10.

15. Process for producing composite components according to Claim 14, where a prepreg,
composed of
A) at least one type of reinforcing fibre
and
B) at least one powdery polyurethane composition, preferably polyurethane composition containing uretdione groups, as matrix material
is produced at temperatures above 160°C, preferably 180°C, optionally with use of pressure and/or vacuum.

## Revendications

1. Préimprégnés, essentiellement constitués par
A) au moins un type de fibres de renforcement et
B) au moins une composition de polyuréthane sous forme de poudre comme matériau de matrice contenant essentiellement
a) au moins un durcisseur contenant des groupes uretdione, à base de composés de polyaddition de polyisocyanates aliphatiques, (cyclo)aliphatiques ou cycloaliphatiques contenant des groupes uretdione et de composés contenant des groupes hydroxyle, le durcisseur se trouvant sous forme solide au-dessous de 40°C et sous forme liquide au-dessus de 125°C, présentant une teneur en NCO libre inférieure à 5% en poids et une teneur en uretdione de 3-25% en poids,
b) au moins un polymère contenant des groupes hydroxyle, qui se trouve sous forme solide au-dessous de 40°C et sous forme liquide au-dessus de 125°C et qui présente un indice d'hydroxyle entre 20 et 200 mg de KOH/gramme,
c) le cas échéant au moins un catalyseur,
d) le cas échéant des adjuvants et des additifs connus par la chimie des polyuréthanes,
de telle sorte que les deux composants a) et b) se trouvent dans un rapport tel qu'à chaque groupe hydroxyle du composant b) correspond 0,3 à 0,7 groupe uretdione du composant a), de préférence 0,45 à 0,55.

2. Préimprégnés selon la revendication 1, le matériau de matrice présentant une température de transition vitreuse Tg d'au moins 40°C.

3. Préimprégnés selon au moins l'une quelconque des revendications précédentes, **caractérisés en ce qu'**ils contiennent au moins un type de matériau de fibres de renforcement parmi le verre, le carbone, les matériaux synthétiques tels que le polyamide (Aramide) ou le polyester, les fibres naturelles ou les matériaux de fibres minérales telles que les fibres de basalte ou les fibres céramiques.

4. Préimprégnés selon au moins l'une quelconque des revendications précédentes, caractérisés en ce des structures planes textiles en non-tissé, en tissu maillé, en étoffe à mailles et en tricot, des conteneurs non à mailles, tels que des tissus, des nappes ou des treillis, sous forme de matériaux à fibres longues et courtes, sont contenus en tant qu'au moins un type de fibres de renforcement.

5. Préimprégnés selon au moins l'une quelconque des revendications précédentes, **caractérisés en ce que** les compositions de polyuréthane sous forme de poudre contiennent essentiellement des mélanges de polymères b) présentant des groupes fonctionnels réactifs par rapport aux isocyanates en tant que liants et des diisocyanates ou des polyisocyanates bloqués de manière interne et/ou par des agents de blocage en tant que durcisseurs a).

6. Préimprégnés selon au moins l'une quelconque des revendications précédentes, **caractérisés en ce que** des polymères présentant des groupes hydroxyle, des groupes amino et des groupes thiol, en particulier des polyesters, des polyéthers, des polyacrylates, des polycarbonates et des polyuréthanes présentant un indice d'OH de 20 à 500 mg de KOH/gramme et une masse molaire moyenne de 250 à 6000 g/mole sont utilisés.

7. Préimprégnés selon au moins l'une quelconque des revendications précédentes, **caractérisés en ce que** des diisocyanates ou des polyisocyanates, choisis parmi l'isophoronediisocyanate (IPDI), l'hexaméthylènediisocyanate (HDI), le diisocyanatodicyclohexylméthane (H₁₂MDI), le 2-méthylpentanediisocyanate (MPDI), le 2,2,4-triméthylhexaméthylènediisocyanate/2,4,4-triméthylhexaméthylènediisocyanate (TMDI) et/ou le norbornanediisocyanate (NBDI), de manière particulièrement préférée l'IPDI, l'HDI, le TMDI et l'H₁₂MDI sont utilisés, les isocyanurates étant également utilisables.

8. Préimprégnés selon au moins l'une quelconque des revendications précédentes, **caractérisés en ce que** des agents de blocage externes, choisis parmi l'ester éthylique de l'acide acétoacétique, la diisopropylamine, la méthyléthylcétoxime, l'ester diéthylique de l'acide malonique, l'ε-caprolactame, le 1,2,4-triazole, le phénol ou les phénols substitués et/ou le 3,5-diméthylpyrazole, sont utilisés.

9. Préimprégnés selon au moins l'une quelconque des revendications précédentes, **caractérisés en ce que** des produits d'addition d'IPDI, contenant des groupes isocyanurate et des structures isocyanate bloquées par ε-caprolactame, sont utilisés.

10. Préimprégnés selon au moins l'une quelconque des revendications précédentes, **caractérisés en ce que** les compositions de polyuréthane sous forme de poudre B) contiennent des catalyseurs supplémentaires, de préférence du dilaurate de dibutylétain, de l'octoate de zinc, du néodécanoate de bismuth et/ou des amines tertiaires, de préférence du 1,4-diazabicyclo[2,2,2,]octane, en des quantités de 0,001-1% en poids.

11. Utilisation de la composition de polyuréthane sous forme de poudre B) selon au moins l'une quelconque des revendications 5 à 10 pour la préparation de préimprégnés, en particulier avec des fibres de renforcement en fibres de verre, de carbone ou d'aramide.

12. Procédé pour la préparation de préimprégnés selon au moins l'une quelconque des revendications 1 à 10 par application, de préférence par des procédés d'épandage, du composant B) sur le composant A), le cas échéant fixation de B), de préférence sous l'effet de la chaleur, de manière particulièrement préférée par frittage.

13. Utilisation des préimprégnés selon au moins l'une quelconque des revendications 1 à 10, essentiellement constitués par
A) au moins un type de fibres de renforcement et
B) au moins une composition de polyuréthane sous forme de poudre comme matériau de matrice
pour la préparation de composites dans la construction des bateaux et des navires, dans la technique aéronautique et astronautique, dans la construction d'automobiles, pour deux-roues, de préférence les motocyclettes et les bicyclettes, dans les domaines de l'automobile, de la construction, de la technique médicale, du sport, dans l'industrie électrique et électronique, dans les installations de production d'énergie, par exemple pour des pales de rotor dans les installations éoliennes.

14. Composants composites, comprenant des préimprégnés transformés selon l'une quelconque des revendications 1 à 10.

15. Procédé pour la préparation de composants composites selon la revendication 14, un préimprégné, formé à partir de
A) au moins un type de fibres de renforcement
et
B) au moins une composition de polyuréthane sous forme de poudre, de préférence une composition de polyuréthane contenant des groupes uretdione, comme matériau de matrice
étant préparé à des températures supérieures à 160°C, de préférence à 180°C, le cas échéant en utilisant de la pression et/ou un vide.
